Europäisches Patentamt

(19) **European Patent Office**

Office européen des brevets

(11) Publication number: **0 289 457**
**B1**

(12) # EUROPEAN PATENT SPECIFICATION

(45) Date of publication of the patent specification:
22.11.90

(51) Int. Cl.⁵: **E21B 10/16**, E21B 10/12,
E21B 10/20, E21B 10/52

(21) Application number: 88810240.7

(22) Date of filing: 14.04.88

(54) Rotary drilling device.

(30) Priority: 21.04.87 GB 8709437

(43) Date of publication of application:
02.11.88 Bulletin 88/44

(45) Publication of the grant of the patent:
22.11.90 Bulletin 90/47

(84) Designated Contracting States:
AT BE CH DE ES FR GB GR IT LI LU NL SE

(56) References cited:
EP-A- 0 040 846
EP-A- 0 072 072
WO-A-85/02223
US-A- 1 879 127
US-A- 2 598 518
US-A- 4 168 755
US-A- 4 203 496

(73) Proprietor: CLEDISC INTERNATIONAL B.V., Johannes
Vermeerstraat 18, NL-1071 DR Amsterdam(NL)

(72) Inventor: Reid, Neil George, Whiteleaf House Whiteleaf,
Aylesbury HP17 0HL(GB)
Inventor: Kaalstad, Oscar William, 365 Beloit Avenue,
Winterpark Fla 32789(US)

(74) Representative: Jörchel, Dietrich R.A. et al, c/o
BUGNION S.A. 10, route de Florissant Case postale 375,
CH-1211 Genève 12 Champel(CH)

**Description**

The present invention relates to a rotary drilling device which comprises a drill body adapted to be rotated about an axis of rotation, a cutting member mounted rotatably on the body and having a plurality of teeth mounted thereon, and at least one counter-reaction member mounted on the body and projecting at least partially radially therefrom, the rotary drilling device being adapted to form a hole having a substantially cylindrical wall portion and a generally concave bottom portion.

A device of this kind is described in the EP-A 72 072 and corresponding US-A 4 549 614. In this document, the device described and tested has yielded very good results; nevertheless, it has become apparent that these results could be improved still further by modifying the shape of the counter-reaction member and its position in relation to the cutting disc. The counter-reaction member described in EP 72 072 is either a roller or a friction member which bears chiefly on the cylindrical wall of the drilled hole in order to compensate the radial component of the reaction of the ground on the cutting disc, to centre the head and to strengthen the cylindrical wall of the hole. However, depending upon the nature of the ground, the cutting head sometimes tends to enter too far into the ground, under the effect of the load to which it is subjected, and this can cause an overload or even a seizure of the means producing the rotation of the drilling head, or, yet again, the head can deviate from the required drilling line because of a slippage of the device on the ground of the bottom of the hole, this bottom not having been compacted after the disc has passed through.

The purpose of the present invention is to overcome these disadvantages by offering a drilling device whose counter-reaction member eliminates the above mentioned disadvantages by virtue of its shape and its arrangement.

The drilling device according to the invention is defined by claim 1.

The advantages of the device according to the invention are the following : since the counter-reaction member is arranged on the body so as to be in contact only with the concave bottom of the hole, the withdrawal of the drilling device from the hole is made easier because, between the counter-reaction member and the cylindrical wall of the hole, there is a space. This space may also be useful in providing passage for the removal of the debris from the hole by means of the drilling fluid.

A further advantage of the device is that the contact between the counter-reaction member and the bottom of the hole serves to remove any irregularities in the concave shape of the bottom left by the previous passage of the cutting disc by smoothing off any projecting peaks and compacting the surface of the hole in readiness for the next passage of the cutting disc. This action of reshaping and compacting the concave surface of the bottom of the hole reduces the risk of deviation from the required drilling axis. If the drilling device is not fitted with a counter-reaction member to perfom this fonction, it may be subject to deviation from the drilling axis as caused by diversion of the cutting disc from its true path by peaks and hollows in the irregular bottom of the hole or by slippage of the cutting disc into pockets of lower resistance in an uncompacted hole bottom.

Yet a further advantage of the device, according to a preferred embodiment, is that the surface of contact of the counter-reaction member is so positioned in relation to the cutting disc that it prevents the teeth on the disc from entering the ground at the cutting face by more than a pre-determined depth. An efficient, steady and quick drilling operation is best achieved when the cutting teeth on the disc are constrained to partial entry of the ground, rather than to the full depth of the teeth, because, on the one hand, the debris cut away is smaller and thereby easier to remove by means of the drilling fluid, and, on the other hand, it is known that the cutting action of the teeth is more efficient and requires the application of less force, thereby preventing the overloading of the means for driving the device in rotation.

The surface of the counter-reaction member in contact with the concave bottom of the hole may be so shaped that it maintains continuous contact with the hole over its entire area. In this form, the counter-reaction member may be made from suitably resistant material, such as hardened steel, so as to withstand the abrasion resulting from contact with the bottom of the hole during operation. In another arrangement, the surface of the counter-reaction member may be interspersed with a pattern of hard studs, as might be made from tungsten carbide, which project from the surface of the counter-reaction member by a typical distance of 2mm or more and thereby provide flow-through channels for the flushing fluid between the surface of the counter-reaction member and the bottom of the hole for purposes of cooling the counter-reaction member and removal of fine debris from the cutting face. These studs might be arranged in an alternate overlapping pattern so as to provide a complete sweeping and compacting effect over the bottom of the hole between highest and lowest points of contact of the counter-reaction member and thereby perfom the aforementioned smoothing operation of the hole bottom most effectively. Alternatively, in some types of ground, it may be preferable to arrange the studs in spaced pairs, the studs of each pair being radially aligned with one another from the axis of rotation of the drilling device. This pattern provides uninterrupted flow-through channels in the space between each pair of studs for efficient cooling and debris removal.

In a preferred arrangement, the rotational axis of the cutting disc with respect to the body is displaced from the axis of rotation of the device so that the cutting disc is positioned to provide some 'lead' in the direction of rotation over a concentric arrangement. This displacement ensures that cutting is perfomed by the leading teeth on the disc and that clearance exists between the trailing teeth and the hole to prevent the stalling of the disc in rotation, which might be caused by engagement of the trailing teeth with the hole if 'lead' is not provided, and also to facilitate removal of debris in the clearance thus created behind the disc. With this arrangement, cutting is performed by the teeth in the lower leading or cutting quadrant of the disc and, accordingly, the preferred position of the counter-reaction member is diametrically opposite to the cutting quadrant through the axis of rotation of the device. In this position, the counter-reaction member is best equipped to resist and counteract the radial forces imposed by the ground on the device at the cutting face and thus prevent deviation or wander from the required drilling axis.

Yet another embodiment can be envisaged in which the directional stability of the drilling axis might be further assured by the provision of two counter-reaction members radially positioned, typically, at 120 degrees to each other and to the cutting quadrant on the disc.

In its simplest and most economic arrangement, the counter-reaction member may be formed integrally with the body of the device, as could be produced by the inclusion of the shapes of both body and counter-reaction member in a single steel casting. However, the surface of the counter-reaction member which contacts the bottom of the hole can be subject to severe wear during use of the device and this surface may degrade to the point at which premature unserviceability of an otherwise useable body is caused.

A preferred embodiment, therefore, is the provision of the counter-reaction member as a separate component from the body with means of location and assembly thereto so that, in the event of wear of the counter-reaction member progressing to the point of impairment of function, it can be removed from the body and replaced with a new counter-reaction member to enable continued use of the drilling device. Yet a further embodiment of this arrangement provides for the attachment of the counter-reaction member to the body in such a manner that the position of the counter-reaction member may be adjusted in relation to the cutting disc in order to achieve the optimum position for efficient cutting. This may be done by mounting the counter-reaction member in slide locations formed in the body, which are aligned with the axis of rotation of the device, and securing thereto by means of an adjusting screw. The height of the counter-reaction member relative to the cutting disc may then be varied to suit the nature of the ground being drilled.

The invention will be described in greater detail with the aid of the attached drawings.

Figure 1 shows a general arrangement side view of the drilling device and its relationship to the hole drilled.

Figure 2 & 3 shows scrap views of lower portion of the device in side elevation to illustrate alternative patterns of stud inserts in the counter-reaction member.

Figures 4 & 4A show a view of the underside of the drilling device.

Figure 5 shows a means for the attachment of the counter-reaction member to the body which enables the position of the counter-reaction member to be adjusted in relation to the cutting disc.

The drilling device comprises mainly a body 1, a rotary cutting disc 2, and a counter-reaction member 3.

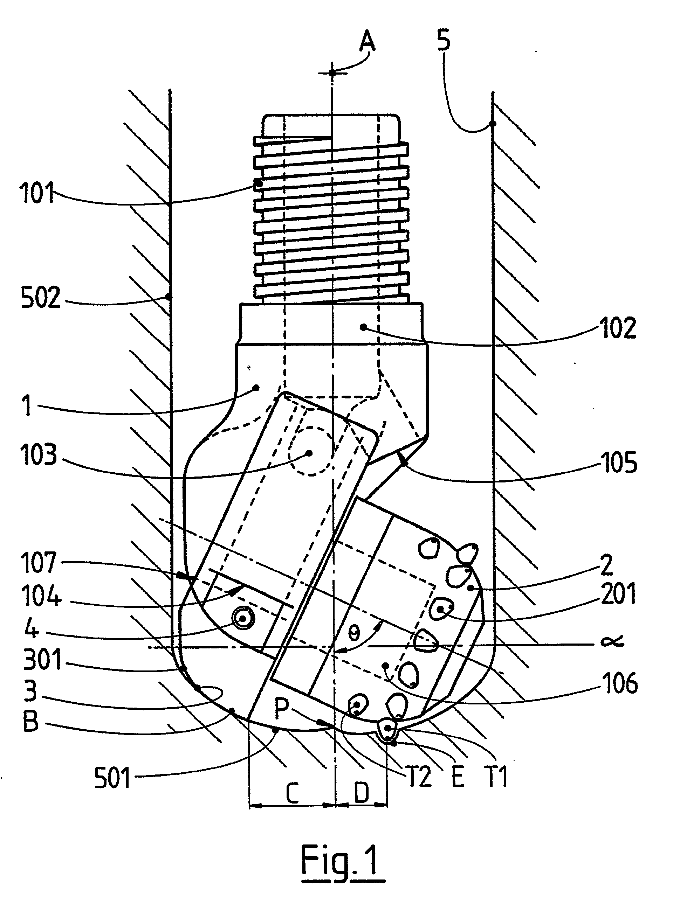

On its upper part, body 1 is provided with a threading 101 to effect its connection to the rotary driving means usually employed in drilling. A conduit 102, for circulating the drilling fluid under pressure, passes through the body 1. The conduit 102 ends in a conduit 103 which is displaced from axis of rotation A and opens into an orifice 104 to direct drilling fluid to the bottom of the hole, between the disc 2 and counter-reaction member 3, in order to remove debris produced at the cutting face by the action of the disc 2. Another branch from conduit 102 opens into an orifice 105 which directs drilling fluid across the cutting face of disc 2 to clear debris away from teeth on the disc, so as not to impair their cutting action, and also assists in the cooling of the disc. On the lower part of body 1 is fitted a cylindrical axle 106 whose axis is set at an angle θ to the axis of rotation A of the body 1. In conjunction with the design of disc 2 and the configuration of cutting teeth thereon, angle θ is preferably between 60 and 70 degrees and is chosen to ensure that the sweep of the cutting teeth, in the rotation of both the drilling device as a whole and also of disc 2, covers the entire area of the hole being drilled. Cutting disc 2 is fitted to axle 106, to enable rotation thereon, using known means such as plain journal, ball or roller bearings. On the side of body 1 opposite to that carrying axle 106 is situated counter-reaction member 3. Figure 1 shows counter-reaction 3 as a separate component which is fitted to body 1 by means of a location slot 107 therein, which may be angularly displaced from axis of rotation A as shown, and by pin 4 which passes through holes in both body 1 and counter-reaction member 3 to secure the latter in position. By these means, counter-reaction member 3 may be removed from body 1, by removal of pin 4 and withdrawal from slot 107, and then replaced by a new counter-reaction member. Such replacement might be occasioned if the used counter-reaction member has experienced excessive wear or, alternatively, if the drilling application and the type of disc 2 fitted to the device necessitates a counter-reaction member of a different shape. As an alternative arrangement, which is both simpler and more economic, counter-reaction member 3 can be formed as an integral part of body 1 for any applications in which the replacement of counter-reaction member 3 is not deemed to be necessary during the useful life of the drilling device. This is not specifically illustrated but, from Figure 1, it can be easily seen that the shape designated counter-reaction member 3 could form part of body 1 as might be done, for example, if body 1 is produced as a casting.

The lower face 301 of counter-reaction member 3 maintains contact with the concave bottom 501 of the hole 5. Additionally, the maximum radial projection from axis of rotation A of any part of counter-reaction member 3 and the body 1 to which counter-reaction member 3 is attached is less than the maximum radial projection of the teeth 201 on disc 2 and thereby is less than the radius of the cylindrical wall 502 of the hole being drilled. Thereby, the contact surface between the lower face 301 of counter-reaction member 3 and the bottom 501 of the hole 5 is always below the line at which the curved bottom 501 of the hole 5 meets the cylindrical wall 502, this line being approximately situated on the theoretical plane α which is perpendicular to the axis of rotation A of the body 1 and passing through the tooth on the disc 2 which has the greatest radial projection from said axis of rotation A. The lowest point B of the lower face 301 of the counter-reaction member 3 is at a radially measured distance C from axis of rotation A so that distance C is preferably greater than the radially measured distance D from axis of rotation A to the lowest point of contact E of the disc 2 with the ground at the tip of tooth T1. This relationship between distances C and D is preferred because within the intended cutting geometry of the device a peak P in the profile of the hole bottom between point E and the axis of rotation A is allowed to form and counter-reaction member 3 will not function optimally unless its lowest point of contact B with the bottom of the hole is at a greater radial distance from axis of rotation A than that of point E in order to avoid interference of the lower face 301 of counter-reaction member 3 with the aforementioned peak.

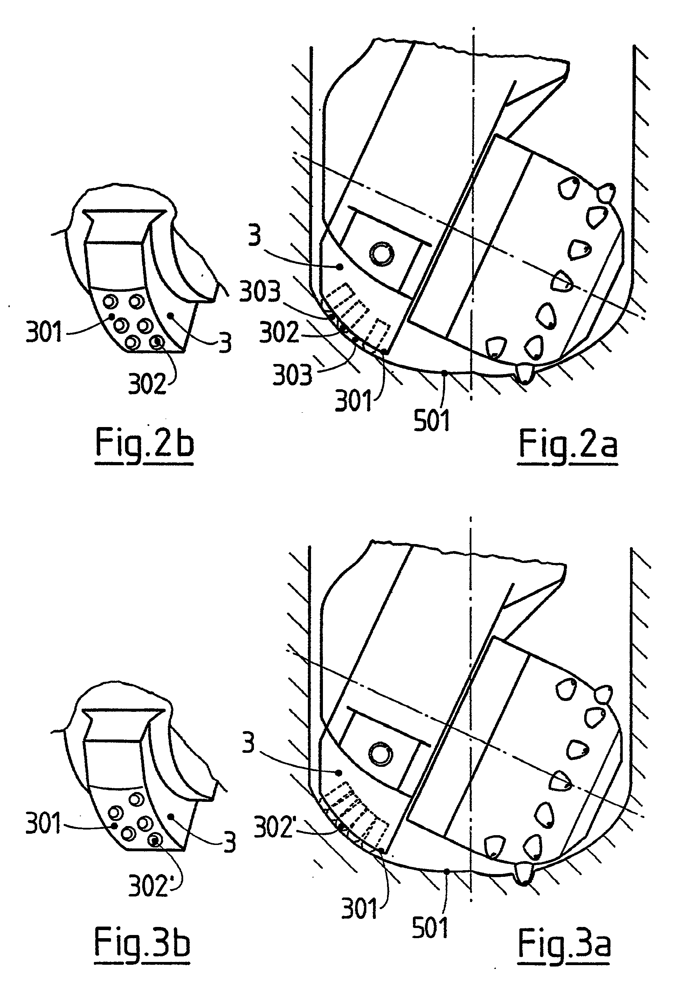

The lower face 301 of counter-reaction member 3 may be so shaped that it is in continuous contact with the concave bottom 501 of the hole 5 as shown in Figure 1. Alternatively, Figures 2A, 2B and 3A, 3B show arrangements in which lower face 301 of counter-reaction member 3 is interspersed with patterns of projecting, hardened studs which themselves maintain contact with the bottom of the hole and thus cause face 301 to be lifted clear thereof. Figures 2A and 2B show an arrangement in which the hardened studs 302, which may be made from tungsten carbide of like material, are inserted into the lower face 301 of counter-reaction member 3 in spaced pairs, the studs of each pair being radially aligned with one another from the axis of rotation of the drilling device thus creating uninterrupted flow-through channels 303 in the space between each pair of studs. These channels 303 provide passage through which the drilling fluid may flow in order to cool counter-reaction member 3 and also to flush away debris produced at the cutting face. Figures 3A and 3B show an arrangement whereby the studs 302' are arranged in an alternating pattern so as to provide a complete sweeping effect over the bottom 501 of the hole between highest and lowest points of surface 301 on counter-reaction member 3 and thereby perform the aforementioned smoothing and compacting operation on the bottom 501 of the hole most effectively.

Disc 2 is made typically from toughened steel and carries teeth 201 which perform the cutting operation in the hole. The teeth 201 may either be formed integral with disc 2, by the machining of disc 2 itself and hardening thereafter, or by the insertion of hard metal studs, made for example from tungsten carbide, into preformed holes in the disc 2, this latter arrangement being shown in Figure 1. Thus secured into the disc 2, the studs project from the surface of disc 2 to form the teeth 201, the projecting portion being profiled in such a way as to provide an efficient cutting action. The cutting teeth 201 are arranged in two peripheral rows around the surface of disc 2 perpendicular to the axis of rotation of the disc. The outer row of teeth, most distant from the axis of rotation A of the device, and of which tooth T1 is a part, includes most of the teeth in the disc 2 and performs the major cutting action of the device. The inner row of teeth, of which tooth T2 is a part, performs a secondary cutting action which is described hereafter.

E is the lowest point of the disc 2 and, in principle therefore, the point which carries the greatest load since it is the lowest tooth T1 of the teeth 201 entering the ground (Figure 1). The tooth T2 is situated slightly higher and its function is to break and remove the peak P which is deliberately created as a result of the relative positions of the rows of teeth in the middle of the concave bottom 501 of the hole 5. Peak P is useful because, as described in Patent EP 72.072 (US Patent 4.549.614), it assists in keeping the drilling device central on the axis of rotation A. But peak P must be cut away as drilling progresses and this task is perfomed by the teeth T2.

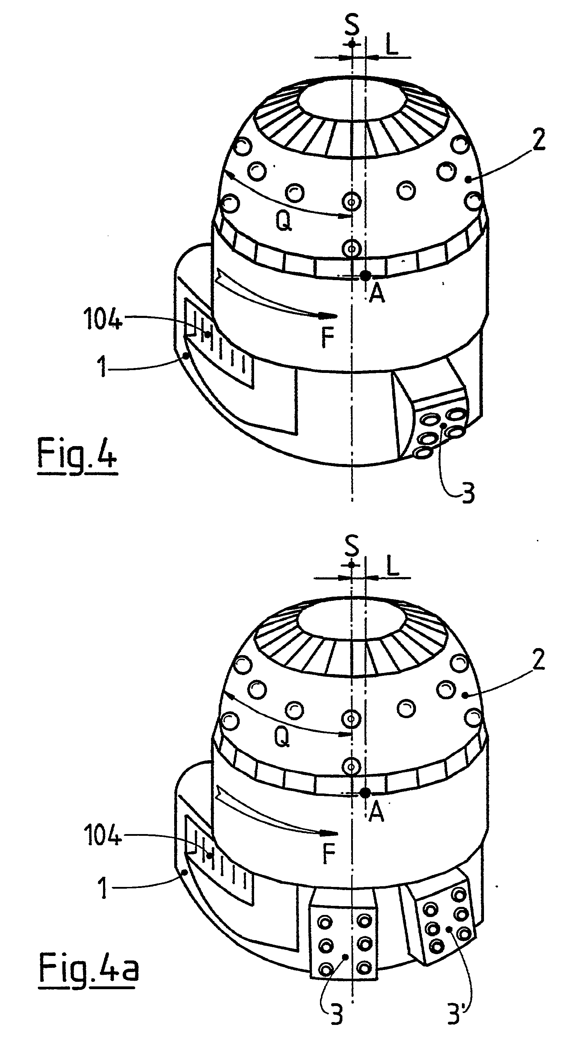

Figure 4 shows a view of the drilling device when seen from the underside. In a preferred embodiment, the rotational axis S of the cutting disc is displaced from the axis of rotation A of the drilling device so as to provide a 'lead' of distance L in the direction of rotation F. This displacement ensures that the cutting is perfomed by the leading teeth on the disc and that clearance exists between the trailing teeth and the hole produced by the device to prevent the stalling of the disc in rotation, which might otherwise be caused by engagement of the trailing teeth with the hole if lead L is not provided, and also to facilitate the removal of debris produced at the cutting face in the clearance this created behind the disc. With this arrangement, cutting is perfomed by the teeth in the lower leading quadrant Q of the disc, this being defined as the peripheral arc around the outer row of teeth 201 between the most forward tooth on the row in the direction of rotation F of the device and the lowest tooth T1. Accordingly, the preferred position of counter-reaction member 3 is diametrically opposite to the cutting quadrant Q through the axis of rotation A of the device. In this position, counter-reaction member 3 is best equipped to resist and counteract the radial forces imposed by the ground on the device at the cutting face and thus prevent deviation or wander from the required drilling axis. Yet another embodiment can be envisaged in which the directional stability of the drilling axis might be further assured by the provision of two counter-reaction members 3 and 3', as shown in Figure 4A, the positions of which are preferably displaced by 120 degrees, but at the same height, with respect to one another and with respect to cutting disc 2.

Another important feature of the device is that the counter-reaction member 3 can be positioned in height relative to the cutting disc 2 so as to prevent teeth T1 from entering the ground by more than a predetermined distance since the most efficient cutting performance has been found to be obtained when teeth T1 are only permitted partial entry into the ground. Furthermore, such limitation of entry into the ground by the action of counter-reaction member 3 will prevent shearing off of the teeth T1 as might otherwise occur if there was no limitation of entry.

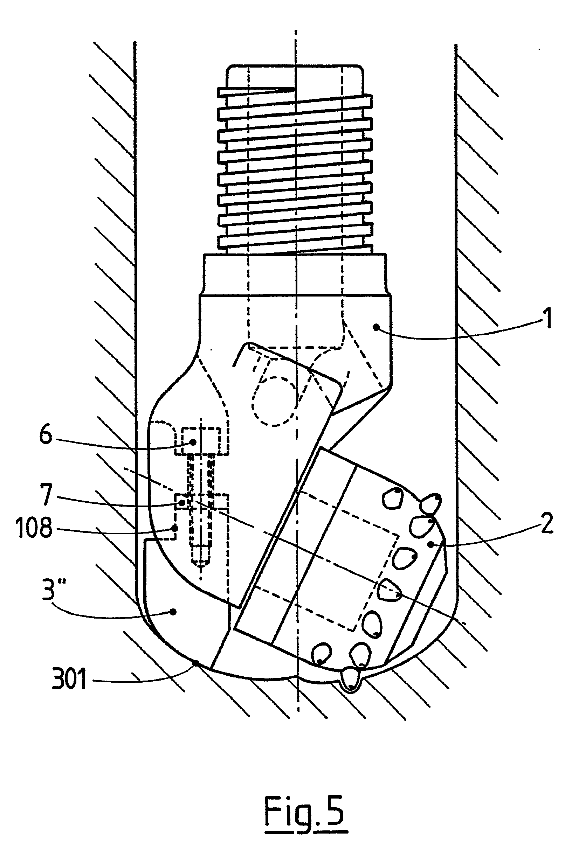

In order to take account of the differences which can occur in the extent of optimum tooth entry according to the nature of the ground and also to make provision for the possible need for variations in the profile and projection of teeth T1 from disc 2 for drilling in differents types of ground, an arrangment is described whereby counter-reaction member 3 is mounted on body 1 in such a manner that the height of surface 301 on counter-reaction member 3 may be adjusted relative to cutting disc 2. Figure 5 shows such an arrangement wherein counter-reaction member 3″ is shaped to locate in a vertical slot 108 of body 1 and is adjustably secured therein, with respect to cutting disc 2, by screw 6.

The adjustment in height of surface 301 relative to cutting disc 2 on this arrangement is obtained by packing washer 7, the thickness of which may be varied according to the height required.

## Claims

1. A rotary drilling device, which comprises:
a drill body (1) adapted to be rotated about an axis (A) of rotation:
a cutting member (2) mounted rotatably on the body (1) and having a plurality of teeth (201) mounted thereon; and
at least one counter-reaction member (3) mounted on the body (1) and projecting at least partially radially therefrom, the rotary drilling device being adapted to form a hole (5) having a substantially cylindrical wall portion (502) and a generally concave bottom portion (501), the rotary drilling device being characterised in that the counter-reaction member (3) is situated on the body (1) such that it contacts the hole (5) only at the concave bottom portion (501) thereof, the maximum radial distance measured from the axis of rotation (A) of the body (1) that the counter-reaction member (3) projects is less that the maximum radial distance measured from the axis of rotation (A) of the body (1) that the cutting teeth (201) project.

2. A rotary drilling device, as defined by claim 1, wherein the counter-reaction member (3) has a surface formed thereon which is adapted to contact the hole (5) formed by the drilling device and wherein the counter-reaction member (3) is situated on the body (1) such that the highest point on the surface of the counter-reaction member (3) which contacts the hole (5) is below the point at which the concave bottom portion (501) of the hole joins the cylindrical wall portion (502).

3. A rotary drilling device as defined by one of claims 1 or 2, wherein the lowest point on the surface of the counter-reaction member (3) which contacts the hole (5) is spaced radially from the axis of rotation (A) of the body (1) by distance (C) which is greater than the distance (D) that the lowest point of the cutting member (2) is radially spaced from the axis of rotation (A) of the body (1).

4. A rotary drilling device as defined by one of claims 1 to 3, wherein the surface of the counter-reaction member (3) which contacts the hole (5) is shaped to closely conform to the concave bottom portion (501) of the hole (5).

5. A rotary drilling device as defined by claim 4, wherein the surface of the counter-reaction member (3) is shaped to be convex.

6. A rotary drilling device as defined by one of claims 1 to 5, wherein the counter-reaction member (3) is angularly spaced from the cutting member (2).

7. A rotary drilling device, as defined by one of claims 1 to 6, wherein the counter-reaction member (3) is situated on the body (1) such that its surface which contacts the concave bottom portion (501) of the hole (5) is so positioned in relation to the cutting member (2) that it prevents the lowest teeth of the cutting member (2) from more than partially entering the ground defining the hole (5).

8. A rotary drilling device, as defined by one of claims 1 to 7, wherein the counter-reaction member (3) including a plurality of studs (302) projecting from a surface thereof a distance sufficient to define a plurality of flow-through channels (303) between the surface of the counter-reaction member (3) and the ground defining a hole (5) formed by the drilling device.

9. A rotary drilling device as defined by claim 8, wherein the studs (302) are arranged in an alternating overlapping pattern so as to provide a substantially complete sweeping effect over a portion of the hole (5).

10. A rotary drilling device as defined by claim 8, wherein the studs (302) are arranged in spaced pairs, the studs (302) of each pair being radially aligned with one another from the axis of rotation (A) of the body (1) to provide uninterrupted flow-through channels (303) in the space between each pair of studs (302).

11. A rotary drilling device as defined by one of claims 1 to 10, wherein the axis of rotation (S) of the cutting member (2) relative to the body (1) is displaced from the axis of rotation (A) of the body (1) (i.e., the axes of rotation of the body (1) and the cutting member (2) reside in different parallel planes).

12. A rotary drilling device as defined by one of claims 1 to 11, wherein a portion of the cutting member (2) defines a cutting quadrant (Q) in which cutting of the hole (5) is performed by the teeth (201) situated therein, and wherein the counter-reaction member (3) is positioned on the body (1) diametrically opposite to the cutting quadrant (Q).

13. A rotary drilling device as defined by one of claims 1 to 11, wherein a portion of the cutting member (2) defines a cutting quadrant (Q) in which cutting of the hole (5) is performed by the teeth (201) situated therein, and wherein two counter-reaction members (3 and 3′) are mounted on the body (1) and positioned 120 degrees angularly form each other and from the cutting quadrant (Q) of the cutting member (2).

14. A rotary drilling device as defined by one of claims 1 to 13, wherein the counter-reaction member (3) is integrally formed with the body (1).

15. A rotary drilling device as defined by one of claims 1 to 13, wherein the counter-reaction member (3) is removably mounted on the body (1).

16. A rotary drilling device as defined by claim 15, wherein the counter-reaction member (3) is at least partially slidably received by a slot (107) formed in the body (1).

17. A rotary drilling device as defined by claim 16, which further comprises a removable pin (4) mounted on the counter-reaction member (3) and the body (1) to secure the counter-reaction member (3) in position in the slot (107).

18. A rotary drilling device as defined by one of claims 1 to 13, wherein the counter-reaction member (3″) is adjustably mounted on the body (1) and adjustably positionable in relation to the cutting member (2).

19. A rotary drilling device as defined by one of claims 1 to 12 which further comprises means for adjustably mounting the counter-reaction member (3″) on the body (1) to effect the relative positioning of the counter-reaction member (3″) with respect to the cutting member (2), the adjustable mounting means including a screw (6) mounted on the body, the counter-reaction member (3″) being received by a slot (108) formed in the body (1) and secured therein by the screw (6), the adjustable mounting means further including a spacer (7), the spacer (7) being disposed between the counter-reaction member (3″) and the body (1) and having a pre-selected thickness so that the counter-reaction member (3″) extends from the slot (108) a predetermined distance.

**Patentansprüche**

1. Drehbohrvorrichtung mit
einem Bohrkörper (1), der für eine Drehung um eine Rotationsachse (A) eingerichtet ist;
einem Schneidglied (2), das drehbar auf dem Körper (1) montiert ist und eine Vielzahl von an ihm befestigten Zähnen (20) aufweist, und
wenigstens einem Gegenwirkungsglied (3), das am Körper (1) montiert ist und zumindest teilweise radial an ihm vorsteht, wobei die Drehbohrvorrichtung dazu angepasst ist, ein Loch (5) mit einem im wesentlichen zylindrischen Wandteil (502) und einem allgemein konkaven Bodenteil (501) zu formen, und wobei diese Drehbohrvorrichtung dadurch gekennzeichnet ist, dass das Gegenwirkungsglied (3) derart auf dem Körper (1) angeordnet ist, dass es das Loch (5) nur an dessen konkavem Bodenteil (501) berührt und dass der maximale radiale, von der Rotationsachse (A) des Körpers (1) gemessene Abstand, um welchen das Gegenwirkungsglied (3) vorsteht, kleiner ist als der maximale radiale, von der Rotationsachse (A) des Körpers (1) gemessene Abstand, um welchen die Schneidzähne (20) vorstehen.

2. Drehbohrvorrichtung nach Anspruch 1, dadurch gekennzeichnet, dass das Gegenwirkungsglied (3) eine auf ihm geformte Oberfläche hat, die dazu angepasst ist, das von der Bohrvorrichtung geformte Loch zu berühren, und dass das Gegenwirkungsglied (3) derart auf dem Körper (1) angeordnet ist, dass der höchste Punkt auf der Oberfläche des Gegenwirkungsglieds (3), welcher das Loch (5) berührt, unter dem Punkt liegt, an welchem der konkave Bodenteil (501) des Lochs an den zylindrischen Wandteil (502) angrenzt.

3. Drehbohrvorrichtung nach Anspruch 1 oder 2, dadurch gekennzeichnet, dass der tiefste Punkt auf der Oberfläche des Gegenwirkungsglieds (3), welcher das Loch (5) berührt, einen radialen Abstand von der Rotationsachse (A) des Körpers (1) hat, der grösser ist als der Abstand (D), um welchen der niedrigste Punkt des Schneidglieds (2) radial von der Rotationsachse (A) des Körpers (1) entfernt ist.

4. Drehbohrvorrichtung nach einem der Ansprüche 1 bis 3, dadurch gekennzeichnet, dass die Oberfläche des Gegenwirkungsglieds (3), welche das Loch (5) berührt, so geformt ist, dass sie sich eng an den konkaven Bodenteil (501) des Lochs (5) anpasst.

5. Drehbohrvorrichtung nach Anspruch 4, dadurch gekennzeichnet, dass die Oberfläche des Gegenwirkungsglieds (3) konvex geformt ist.

6. Drehbohrvorrichtung nach einem der Ansprüche 1 bis 5, dadurch gekennzeichnet, dass das Gegenwirkungsglied (3) winkelmässig im Abstand vom Schneidglied (2) angeordnet ist.

7. Drehbohrvorrichtung nach einem der Ansprüche 1 bis 6, dadurch gekennzeichnet, dass das Gegenwirkungsglied (3) derart auf dem Körper (1) angeordnet ist, dass seine Oberfläche, welche den konkaven Bodenteil (501) des Lochs (5) berührt, so in bezug auf das Schneidglied (2) positioniert ist, dass sie verhindert, dass die tiefsten Zähne des Schneidglieds (2) mehr als teilweise in den das Loch (5) bestimmenden Grund eindringen.

8. Drehbohrvorrichtung nach einem der Ansprüche 1 bis 7, dadurch gekennzeichnet, dass das Gegenwirkungsglied (3) eine Vielzahl von Ansätzen (302) hat, die an dessen Oberfläche um einen hinreichenden Abstand derart vorspringen, dass sie eine Vielzahl von Durchflusskanälen (303) zwischen der Oberfläche des Gegenwirkungsglieds (3) und dem ein von der Bohrvorrichtung geformtes Loch (5) bestimmenden Grund definieren.

9. Drehbohrvorrichtung nach Anspruch 8, dadurch gekennzeichnet, dass die Ansätze (302) in einem abwechselnden, überlappenden Muster derart angeordnet sind, dass ein im wesentlichen vollständiger Räumeffekt über einen Teil des Lochs (5) gewährleistet ist.

10. Drehbohrvorrichtung nach Anspruch 8, dadurch gekennzeichnet, dass die Ansätze (302) paarweise im Abstand angeordnet sind, und die Ansätze (302) jedes Paares radial miteinander in bezug auf die Rotationsachse (A) des Körpers (1) ausgerichtet sind, um ununterbrochene Durchflusskanäle (303) im Raum zwischen jedem Paar von Ansätzen (302) zu bilden.

11. Drehbohrvorrichtung nach einem der Ansprüche 1 bis 10, dadurch gekennzeichnet, dass die Rotationsachse (S) des Schneidglieds (2) relativ zum Körper (1) von der Rotationsachse (A) des Körpers (1) versetzt ist (das heisst die Rotationsachsen des Körpers (1) und des Schneidglieds (2) liegen in unterschiedlichen parallelen Ebenen).

12. Drehbohrvorrichtung nach einem der Ansprüche 1 bis 11, dadurch gekennzeichnet, dass ein Teil des Schneidglieds (2) einen Schneidquadranten (Q) definiert, in welchem das Schneiden des Lochs (5) durch die in ihm liegenden Zähne (20) erfolgt und dass das Gegenwirkungsglied (3) am Körper (1) diametral dem Schneidquadranten (Q) gegenüberliegend positioniert ist.

13. Drehbohrvorrichtung nach einem der Ansprüche 1 bis 11, dadurch gekennzeichnet, dass ein Teil des Schneidglieds (2) einen Schneidquadranten (Q) definiert, in welchem das Schneiden des Lochs durch die in ihm liegenden Zähne (201) erfolgt, und dass zwei Gegenwirkungsglieder (3 und 3') auf dem Körper (1) montiert und im Winkelabstand von 120° voneinander und vom Schneidquadranten (Q) des Schneidglieds (2) positioniert sind.

14. Drehbohrvorrichtung nach einem der Ansprüche 1 bis 13, dadurch gekennzeichnet, dass das Gegenwirkungsglied (3) einteilig mit dem Körper (1) geformt ist.

15. Drehbohrvorrichtung nach einem der Ansprüche 1 bis 13, dadurch gekennzeichnet, dass das Gegenwirkungsglied (3) abnehmbar auf dem Körper (1) montiert ist.

16. Drehbohrvorrichtung nach Anspruch 15, dadurch gekennzeichnet, dass das Gegenwirkungsglied (3) wenigstens teilweise gleitbar in einem im Körper (1) gebildeten Schlitz (107) angeordnet ist.

17. Drehbohrvorrichtung nach Anspruch 16, welche ferner einen lösbar auf dem Gegenwirkungsglied (3) und dem Körper (1) montierten Stift (4) aufweist, um das Gegenwirkungsglied (3) in seiner Lage im Schlitz (107) zu befestigen.

18. Drehbohrvorrichtung nach einem der Ansprüche 1 bis 13, dadurch gekennzeichnet, dass das Gegenwirkungsglied (3") justierbar auf dem Körper (1) montiert und justierbar relativ zum Schneidglied (2) positionierbar ist.

19. Drehbohrvorrichtung nach einem der Ansprüche 1 bis 12, welche ferner Mittel aufweist, um das Gegenwirkungsglied (3") auf dem Körper (1) justierbar zu montieren, so dass die relative Lage des Gegenwirkungsglieds (3") in bezug auf das Schneidglied (2) einstellbar ist, wobei die Mittel zum justierbaren Montieren eine auf dem Körper befestigte Schraube (6) einschliessen, das Gegenwirkungsglied (3") von einem im Körper (1) gebildeten Schlitz (108) aufgenommen wird und darin durch die Schraube (6) befestigt ist und wobei die Mittel zum justierbaren Montieren weiterhin ein Abstandsglied (7) einschliessen, welches zwischen dem Gegenwirkungsglied (3") und dem Körper (1) angeordnet ist und eine vorgewählte Dicke derart hat, dass das Gegenwirkungsglied (3") sich vom Schlitz (108) aus über eine vorbestimmte Länge erstreckt.

**Revendications**

1. Dispositif de forage rotatif, comprenant:
un corps de forage (1) adapté à être entraîné en rotation autour d'un axe (A) de rotation,
un élément de coupe (2) monté rotatif sur le corps (1) et ayant une pluralité de dents (201) montées sur ce dernier, et au moins un élément de contre-réaction (3) monté sur le corps (1) et se projetant au moins partiellement radialement par rapport à ce corps, le dispositif de forage rotatif étant adapté pour former un puits (5) ayant approximativement une paroi cylindrique (502) et un fond (501) ayant une forme généralement concave, caractérisé par le fait que l'élément de contre-réaction (3) est situé sur le corps (1) de telle sorte qu'il contacte le puits (5) seulement sur la partie concave (501) du fond, la distance radiale maximum à laquelle l'élément de contre-réaction (3) se projette mesurée par rapport à l'axe de rotation (A) du corps (1) est inférieure à la distance radiale maximum à laquelle se projettent les dents de coupe (201) mesurée par rapport à l'axe de rotation (A) du corps.

2. Dispositif de forage rotatif comme défini à la revendication 1, caractérisé par le fait que l'élément de contre-réaction (3) présente une surface qui est adaptée pour être en contact avec le puits (5) formé par le dispositif de forage et que l'élément de contre-réaction (3) est situé sur le corps (1) de telle sorte que le point le plus haut sur la surface de l'élément de contre-réaction (3) qui est en contact avec le puits (5) est au dessous du point auquel la partie du fond concave (501) du puits joint la partie cylindrique (502) de la paroi.

3. Dispositif de forage rotatif comme défini par l'une des revendications 1 ou 2, caractérisé par le fait que le point inférieur de la surface de l'élément de contre-réaction (3) qui est en contact avec le puits (5) est espacé radialement par rapport à l'axe (A) de rotation du corps (1) d'une distance (C) qui est plus grande que la distance (D) radiale du point inférieur de l'élément de coupe (2) par rapport à l'axe de rotation (A) du corps (1).

4. Dispositif de forage rotatif comme défini par l'une des revendications 1 à 3, caractérisé par le fait que la surface de l'élément de contre-réaction (3) qui contacte le puits (5) est formée pour être en contact étroit avec la partie concave (501) du fond du puits (5).

5. Dispositif de forage rotatif comme défini par la revendication 4, caractérisé par le fait que la surface de l'élément de contre-réaction (3) est convexe.

6. Dispositif de forage rotatif comme défini par l'une des revendications 1 à 5, caractérisé par le fait que l'élément de contre-réaction (3) est espacé angulairement par rapport à l'élément de coupe (2).

7. Dispositif de forage rotatif comme défini par l'une des revendications 1 à 6, caractérisé par le fait que l'élément de contre-réaction (3) est situé sur le corps (1) de telle sorte que sa surface qui contacte la partie concave (501) du fond du puits (5) est positionnée en relation avec l'élément de coupe (2) de sorte que la dent inférieure de l'élément de coupe (2) n'entre que partiellement dans le fond du puits (5).

8. Dispositif de forage rotatif comme défini par l'une des revendications 1 à 7, caractérisé par le fait que l'élément de contre-réaction (3) comprend une pluralité d'ergots (302) se projetant par rapport à sa surface à une distance suffisante pour définir une pluralité de passages (303) d'écoulement entre la surface de l'élément de contre-réaction (3) et le sol du puits (5) formé par le dispositif de forage.

9. Dispositif de forage rotatif comme défini par la revendication 8, caractérisé par le fait que les ergots (302) sont disposés dans une configuration de recouvrement alterné de sorte à permettre un effet de balayage approximativement complet, sur une partie du puits (5).

10. Dispositif de forage rotatif comme défini par la revendication 8, caractérisé par le fait que les ergots (302) sont disposés en paires espacées, les ergots (302) de chaque paire étant radialement alignés l'un avec l'autre par rapport à l'axe de rotation (A) du corps (1) pour permettre la formation des passages (303) d'écoulement ininterrompus dans l'espace situé entre chaque paire d'ergots (302).

11. Dispositif de forage rotatif comme défini par l'une des revendications 1 à 10, caractérisé par le fait que l'axe de rotation (S) de l'élément de coupe (2) par rapport au corps (1) est déplacé par rapport à l'axe de rotation (A) de ce corps (1) (c'est-à-dire les axes de rotation du corps (1) et de l'élément de coupe (2) se trouvent dans des plans parallèles différents).

12. Dispositif de forage rotatif comme défini par l'une des revendications 1 à 11, caractérisé par le fait qu'une partie de l'élément de coupe (2) définit un quadrant de coupe (Q) avec lequel est découpé le puits (5) par les dents (201) situées sur celui-ci, et que l'élément de contre-réaction (3) est positionné sur le corps (1) diamétralement opposé à ce quadrant de coupe (Q).

13. Dispositif de forage rotatif comme défini par l'une des revendications 1 à 11, caractérisé par le fait qu'une partie de l'élément de coupe (2) définit un quadrant de coupe (Q) qui assure la coupe du puits (5) par les dents (201) situées sur celui-ci, et que deux éléments de contre-réaction (3 et 3') sont montés sur le corps (1) et positionnés angulairement à 120° l'un par rapport à l'autre et par rapport au quadrant (Q) de coupe de l'élément de coupe (2).

14. Dispositif de forage rotatif comme défini par l'une des revendications 1 à 13, caractérisé par le fait que l'élément de contre-réaction (3) est formé d'une seule pièce avec le corps (1).

15. Dispositif de forage rotatif comme défini par l'une des revendications 1 à 13, caractérisé par le fait que l'élément de contre-réaction (3) est monté amoviblement sur le corps (1).

16. Dispositif de forage rotatif comme défini par la revendication 15, caractérisé par le fait que l'élément de contre-réaction (3) est monté au moins partiellement déplaçable dans une rainure (107) formée sur le corps (1)

17. Dispositif de forage rotatif comme défini par la revendication 16, caractérisé par le fait qu'il comprend en plus une goupille amovible (4) montée sur l'élément de contre-réaction (3) et le corps (1) pour assurer l'élément de contre-réaction (3) dans la rainure (107).

18. Dispositif de forage rotatif comme défini par l'une des revendications 1 à 13, caractérisé par le fait que l'élément de contre-réaction (3″) est monté de manière ajustable sur le corps (1) et positionné de manière ajustable par rapport à l'élément de coupe (2).

19. Dispositif de forage rotatif comme défini par l'une des revendications 1 à 12, caractérisé par le fait qu'il comprend des moyens pour monter de manière ajustable l'élément de contre-réaction (3″) sur le corps (1) pour effectuer un positionnement relatif de l'élément de contre-réaction (3″) par rapport à l'élément de coupe (2), les moyens de montage ajustables comprenant une vis (6) montée sur le corps, l'élément de contre-réaction (3″) étant ajusté dans une rainure (108) formée sur le corps (1) et assurée à l'intérieur par une vis (6), les moyens de démontage ajustables comprenant en plus une entretoise (7), l'entretoise (7) étant disposée entre l'élément de contre-réaction (3″) et le corps (1) et ayant une épaisseur présélectionnée de sorte que l'élément de contre-réaction (3″) s'étend par rapport à la rainure (108) à une distance prédéterminée.

## Fig.1

EP 0 289 457 B1

3

303

302

303

301

501

Fig.2a

301

3

302

Fig.2b

3

302'

301

501

Fig.3a

301

3

302'

Fig.3b

Fig.4

Fig.4a

1

6

7

108

3"

2

301

Fig.5